(19) 

**Europäisches Patentamt**
**European Patent Office**
**Office européen des brevets**

(11) **EP 4 752 954 A1**

(12) **EUROPEAN PATENT APPLICATION**

(43) Date of publication:
**03.06.2026  Bulletin 2026/23**

(21) Application number: **25219171.3**

(22) Date of filing: **27.11.2025**

(51) International Patent Classification (IPC):
*H01M 4/133* (2010.01)     *H01M 4/36* (2006.01)

(52) Cooperative Patent Classification (CPC):
**H01M 4/133;** H01M 4/364; H01M 2004/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024  KR 20240175699**

(71) Applicant: **SAMSUNG SDI CO., LTD.**
**Yongin-si, Gyeonggi-do 17084 (KR)**

(72) Inventors:
• **Moon, Joong Ho**
  **16678 Gyeonggi-do, Suwon-si (KR)**

• **Cha, Yu Rim**
  **16678 Gyeonggi-do, Suwon-si (KR)**
• **Yu, So Jeong**
  **16678 Gyeonggi-do, Suwon-si (KR)**
• **Cho, Hang In**
  **16678 Gyeonggi-do, Suwon-si (KR)**
• **Oh, Se Young**
  **16678 Gyeonggi-do, Suwon-si (KR)**

(74) Representative: **Meissner Bolte Partnerschaft mbB**
**Patentanwälte Rechtsanwälte**
**Postfach 86 06 24**
**81633 München (DE)**

(54) **NEGATIVE ELECTRODE ACTIVE MATERIAL FOR RECHARGEABLE LITHIUM BATTERY AND RECHARGEABLE LITHIUM BATTERY INCLUDING THE SAME**

(57)    A negative electrode active material for a rechargeable lithium battery and a rechargeable lithium battery including the same are disclosed. A negative electrode active material includes a mixture of a first negative electrode active material and a second negative electrode active material, the first negative electrode active material includes natural graphite including secondary particles in which primary particles are arranged; and a coating layer containing amorphous carbon and surrounding the secondary particles, the first negative electrode active material has an orientation degree of 90 or less and a d002 value of 3.356 Å to 3.360 Å, and the second negative electrode active material includes rod-shaped artificial graphite.

FIG. 1.

EP 4 752 954 A1

**Description**

**CROSS-REFERENCE TO RELATED APPLICATION**

The present application claims priority to and the benefit of Korean Patent Application No.10-2024-0175699, filed on November 29, 2024 in the Korean Intellectual Property Office.

**BACKGROUND**

**1. Field**

The present invention relates to a negative electrode active material for a rechargeable lithium battery and a rechargeable lithium battery including the same.

**2. Description of the Related Art**

Recently, with the rapid spread of electronic devices, such as mobile phones, notebook computers, and electric vehicles, using batteries, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contain an active material capable of intercalation and deintercalation of lithium ions and produces electric energy by oxidation and reduction reactions when the lithium ions are intercalated into and deintercalated from the positive electrode and the negative electrode.

**SUMMARY**

According to an aspect of the present invention, a negative electrode active material for a rechargeable lithium battery that exhibits effects of boost charging, enhanced charge C-rate characteristics, improved electrolyte impregnation, and suppression of electrode plate expansion is provided.

According to another aspect of the present invention, a rechargeable lithium battery including the negative electrode active material is provided.

The present invention provides a negative electrode active material for a rechargeable lithium battery, wherein the negative electrode active material includes a mixture of a first negative electrode active material and a second negative electrode active material, wherein the first negative electrode active material includes natural graphite including secondary particles in which primary particles are arranged; and a coating layer containing amorphous carbon and surrounding the secondary particles. The first negative electrode active material has an orientation degree of 90 or less and a d002 value of 3.356 Å to 3.360 Å, and the second negative electrode active material includes rod-shaped artificial graphite.

The present invention provides a rechargeable lithium battery, which includes a negative electrode including the above-described negative electrode active material for a rechargeable lithium battery, and a positive electrode.

**BRIEF DESCRIPTION OF THE DRAWINGS**

The above and other aspects, objects, features, and advantages of the present invention will become more apparent to those of ordinary skill in the art by describing some embodiments thereof in further detail with reference to the accompanying drawings, in which:

FIG. 1 is a conceptual diagram of a first negative electrode active material according to an embodiment;
FIG. 2 is a conceptual diagram of a second negative electrode active material according to an embodiment; and
FIGS. 3 to 6 are cross-sectional views schematically showing rechargeable lithium batteries according to embodiments of the present invention.

**DETAILED DESCRIPTION**

Herein, some embodiments of the present invention will be described in further detail. However, the embodiments are presented as examples, and the present invention is not limited thereto, and the present invention is to be defined by the scope of the claims described below.

Unless otherwise specified herein, when a part, such as a layer, a film, an area, a plate, etc., is said to be "on" another part, it includes not only a case in which the part is "directly on" the other part, but also a case in which one or more other parts are present therebetween.

Unless otherwise specified herein, the singular may also include the plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the components.

Unless otherwise defined herein, the particle size may be an average particle size. In addition, the particle size refers to the average particle size (D50), which is the size of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle size (D50) value may be obtained by performing data analysis, counting the number of particles in each particle size range, and then calculating the D50 value therefrom. Alternatively, the average particle size may be measured using a laser diffraction method. When measuring the average particle size by the laser diffraction method, more specifically, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

When the particle is spherical, the size may mean a diameter.

The negative electrode active material for a rechargeable lithium battery according to an embodiment may provide low resistance, high energy density, boost charging effects, and improved charge C-rate characteristics. Despite including natural graphite in the negative electrode active material, the negative electrode active material may provide significantly low resistance, high energy density, and boost charging effects by overcoming the high-resistance issue inherent to natural graphite. The negative electrode active material further includes a first negative electrode active material in a second negative electrode active material, which are described below, which significantly reduces the overall degree of orientation, thereby enhancing electrolyte impregnation, improving charging characteristics, and significantly reducing electrode plate expansion.

The negative electrode active material for a rechargeable lithium battery includes a mixture of a first negative electrode active material and a second negative electrode active material, wherein the first negative electrode active material includes natural graphite including secondary particles formed by the assembly of primary particles and a coating layer containing amorphous carbon and surrounding the secondary particles, wherein the first negative electrode active material has an orientation degree of 90 or less and a d002 value of 3.356 Å to 3.360 Å, and the second negative electrode active material is rod-shaped artificial graphite.

The negative electrode active material for a rechargeable lithium battery may provide low resistance, high energy density, and effects of boost charging, improved charge C-rate characteristics, enhanced electrolyte impregnation, and suppression of electrode plate expansion by including the mixture.

The negative electrode active material according to an embodiment includes a first negative electrode active material, which is substantially spherical and has a sphericity as described below, and a second negative electrode active material with an elongated rod-like shape. The negative electrode active material may significantly enhance boost charging and long lifetime characteristics by including the first negative electrode active material, and also significantly reduce volume expansion and resistance during charge/discharge, and improve high-rate characteristics by including the second negative electrode active material. In a negative electrode plate including only the second negative electrode active material, the second negative electrode active material may align sequentially only in a direction parallel to the current collector. However, when the first negative electrode active material is additionally included, the second negative electrode active material may also be oriented vertically relative to the current collector due to the first negative electrode active material described below, thereby providing the negative electrode active material with a lower degree of orientation. It is known that a lower orientation degree enhances electrolyte impregnation and suppresses electrode plate expansion.

In an embodiment, the mixture may be included in an amount of 95 wt% or more of the negative electrode active material, for example, 95 to 100 wt%, 99 to 100 wt%, or 100 wt% of the negative electrode active material.

If the first negative electrode active material is not included in the mixture, the battery may exhibit reduced capacity and charge C-rate characteristics, along with an excessively high orientation degree in the negative electrode active material, leading to reduced electrolyte impregnation and increased electrode plate expansion. The first negative electrode active material may significantly reduce the orientation degree of the negative electrode active material including the second negative electrode active material.

In an example, the negative electrode active material, i.e., the mixture, may have a peak intensity ratio $I(002)/I(110)$ (orientation degree) of 200 or less, as determined by X-ray diffraction analysis using Cu $\alpha$ radiation. Within

this range, electrolyte impregnation may be improved, thereby enhancing charge C-rate characteristics and significantly suppressing electrode plate expansion. In an embodiment, for example, the orientation degree may be 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200, and, in an embodiment, 110 or less, for example, 80 to 110. Within this range, the mixture of the first and second negative electrode active materials may significantly enhance electrolyte impregnation and suppress electrode plate expansion.

In an embodiment, for example, the negative electrode active material, i.e., the mixture, may have an average particle diameter (D50) of 10 to 20 $\mu$m, for example 10, 10.5, 11, 11.5, 12, 12.5, 13, 13.5, 14, 14.5, 15, 15.5, 16, 16.5, 17, 17.5, 18, 18.5, 19, 19.5, or 20 $\mu$m. Within this range, an improvement in charge C-rate characteristics may be achieved.

In an embodiment, for example, the negative electrode active material, i.e., the mixture, may have a pellet density of 1.50 to 1.60 g/cc, for example 1.50, 1.51, 1.52, 1.53, 1.54, 1.55, 1.56, 1.57, 1.58, 1.59, or 1.60 g/cc. Within this range, an improvement in charge C-rate characteristics may be achieved.

In an embodiment, for example, the mixture may include 10 to 80 wt% of the first negative electrode active material, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80 wt%, and, in an embodiment, 20 to 50 wt%, and, in an embodiment, 20 to 90 wt% of the second negative electrode active material, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%, and, in an embodiment, 50 to 80 wt%. Within this range, the mixture may easily provide boost charging effects and improve the lifetime under fast charging conditions.

Herein, each component in the negative electrode active material will be described in further detail.

### (1) First negative electrode active material

The first negative electrode active material includes natural graphite including secondary particles in which primary particles are assembled and a coating layer containing amorphous carbon and surrounding the secondary particles, and the first negative electrode active material has an orientation degree of 90 or less and a d002 value of 3.356 Å to 3.360 Å.

The orientation degree and d002 value of the first negative electrode active material may synergistically exhibit effects of boost charging, capacity improvement, and fast-charging lifetime improvement when combined with the second negative electrode active material described below.

In this specification, "orientation degree" refers to the ratio of the diffraction peak intensity of the (002) plane [I(002)] to that of the (110) plane [I(110)], as measured by X-ray diffraction analysis using Cu $\alpha$ radiation, and is expressed as I(002)/I(110).

In this specification, "d002" may refer to the interplanar spacing of the (002) plane for the first negative electrode active material, as measured by X-ray diffraction analysis using Cu $\alpha$ radiation.

Generally, natural graphite has advantages as a negative electrode active material for batteries, but a high resistance thereof may lead to poor charging characteristics, and an internal porosity thereof may cause side reactions, negatively impacting long-term durability and an expansion rate.

The first negative electrode active material addresses this by significantly reducing the average particle diameter of secondary particles of natural graphite into a fine particulate form, thereby effectively lowering resistance. To offset efficiency reduction caused by the increased specific surface area of the secondary particles, the first negative electrode active material is calcined at a temperature described below, thereby reducing the specific surface area while maintaining high efficiency.

In an embodiment, the first negative electrode active material includes natural graphite, amorphous carbon, and the coating layer, and satisfies the orientation degree and d002 described above. Thus, the first negative electrode active material may enhance battery capacity and significantly improve the charge C-rate characteristics, thereby enhancing the fast-charging performance of rechargeable lithium batteries. Although the first negative electrode active material includes natural graphite, the first negative electrode active material may significantly reduce resistance and provide effects of high energy density, suppression of side reactions with the electrolyte, and improved lifetime.

A lower orientation degree results in a more random alignment of edge planes in natural graphite, which increases the disordered orientation of the first negative electrode active material. This facilitates the intercalation and deintercalation of lithium ions into/from the secondary particles of natural graphite, thereby improving the capacity characteristics of rechargeable lithium batteries using the same. In an embodiment, for example, the orientation degree may be 80 or less, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80. In a preferred embodiment, the first negative electrode active material has an orientation degree in the range from 10 to 80, 20 to 80, 30 to 80, 40 to 80, or 50 to 80. The orientation degree may be realized by adjusting the average particle diameter (D50) of the secondary particles and the major axis length of the primary particles. The first negative electrode active material significantly reduces the average particle diameter (D50) of the secondary particles to address the high resistance of natural graphite.

In an embodiment, as described below, the D50 of the secondary particles in the first negative electrode active material is substantially smaller than the major axis length of the primary particles. In an embodiment, the secondary particles are formed by crumpling the primary particles. In an embodiment, the first negative electrode active material includes amorphous carbon and may achieve a high graphitization degree by being prepared through heat treatment at 2500 °C or higher, as described below. This high degree of graphitization may enhance the capacity of the negative electrode active material while mitigating the efficiency reduction due to the reduced average particle size (D50) of the secondary particles and the increased specific surface area. In an embodiment, the first negative electrode active material has a d002 value of 3.356 Å to 3.360 Å. Within this range, the first negative electrode active material, which includes secondary particles with a relatively small average particle diameter (D50), may offset the efficiency reduction due to the increased specific surface area, thereby achieving high capacity. For example, the d002 may be 3.356, 3.3561, 3.3562, 3.3563, 3.3564, 3.3565, 3.3566, 3.3567, 3.3568, 3.3569, 3.357, 3.3571, 3.3572, 3.3573, 3.3574, 3.3575, 3.3576, 3.3577, 3.3578, 3.3579, 3.358, 3.3581, 3.3582, 3.3583, 3.3584, 3.3585, 3.3586, 3.3587, 3.3588, 3.3589, 3.359, 3.3591, 3.3592, 3.3593, 3.3594, 3.3595, 3.3596, 3.3597, 3.3598, 3.3599, or 3.360 Å.

According to an embodiment, the first negative electrode active material may have a mercury (Hg) cumulative pore volume of 0.01 to 0.06 mL/g, for example, 0.01, 0.02, 0.03, 0.04, 0.05, 0.06 mL/g, 0.02 to 0.06 mL/g, 0.03 to 0.06 mL/g, or 0.03 to 0.05 mL/g. Within this range, the first negative electrode active material has minimal internal pores, i.e., empty spaces, and an appropriate amorphous carbon content, resulting in excellent efficiency of the negative electrode active material. Additionally, the negative electrode active material may maintain optimal density to enable effective electrolyte impregnation while controlling the internal area reacting with the electrolyte to non-excessive levels, thereby suppressing side reactions and ensuring a sufficient lifetime. The Hg cumulative pore volume may be a feature of the negative electrode active material, which includes finely ground natural graphite and is prepared by the preparation method described below to minimize or reduce the specific surface area.

In an embodiment, the first negative electrode active material may have a sphericity (S) of 0.85 or more, as defined by Equation 1 below:

Equation 1

$$\text{Sphericity (S)} = 4\pi \times A/B^2,$$

where A is the area of the first negative electrode active material, and B is the perimeter of the first negative electrode active material's shape.

In an embodiment, B may refer to the perimeter of the actual particle shape of the negative electrode active material.

The sphericity of the negative electrode active material may be determined by projecting the three-dimensional particle onto a two-dimensional plane. For example, the sphericity may be defined as the ratio of the circumference of a circle with the same area as the projected particle to the actual perimeter of the particle boundary.

In Equation 1, the area A is calculated by acquiring a cross-sectional SEM image of the negative electrode active material using a controlled pressure scanning electron microscope (CP-SEM) and measuring the actual perimeter B of the particle's boundary through ImageJ software using the cross-sectional image. The area A refers to the area of a circle with a perimeter equal to B. In an embodiment, B may represent the total length measured along the particle's boundary, regardless of whether the shape is perfectly spherical or non-spherical with surface irregularities.

In an embodiment, the first negative electrode active material may have a sphericity of 0.85, 0.86, 0.87, 0.88, 0.89, 0.90, 0.91, 0.92, 0.93, 0.94, 0.95, 0.96, 0.97, 0.98, 0.99, or 1.0, and, in an embodiment, 0.90 to 1.0, 0.90 to 0.98, or 0.90 to 0.95. When the sphericity is within this range, expansion during charge/discharge cycles may be effectively suppressed.

In an embodiment, the first negative electrode active material may have a pellet density of 1.60 to 1.80 g/cc. Within this range, the first negative electrode active material may exhibit reduced internal voids and suppressed side reactions with the electrolyte, thereby improving lifetime characteristics. For example, the pellet density may be 1.60, 1.61, 1.62, 1.63, 1.64, 1.65, 1.66, 1.67, 1.68, 1.69, 1.70, 1.71, 1.72, 1.73, 1.74, 1.75, 1.76, 1.77, 1.78, 1.79, or 1.80 g/cc, and, in an embodiment, 1.70 to 1.80 g/cc.

In an embodiment, the first negative electrode active material may have a tap density of 0.75 to 1.20 g/cc, for example, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, or 1.20 g/cc, and, in an embodiment, 0.75 to 1.0 g/cc, or 0.95 to 1.20 g/cc. Within this range, the negative electrode active material may exhibit reduced internal voids and suppressed side reactions with the electrolyte, thereby improving lifetime characteristics. The tap density is measured using a GeoPyc 1360 Pycnometer from Micromeritics equipped with a chamber of 19.1 mm diameter and having a conversion factor of 0.2907 $cm^3$/mm. The process involves applying a pressure of 108 N three times and calculating the average of the results.

In an embodiment, the first negative electrode active material may have a specific surface area of 10 $m^2$/g or less, for example, 1, 1.5, 2, 2.5, 3, 3.5, 4, 4.5, 5, 5.5, 6, 6.5, 7, 7.5, 8, 8.5, 9, 9.5, or 10 $m^2$/g, and, in an embodiment, 1 to 10 $m^2$/g. Within this range, the first negative electrode active material may exhibit reduced internal voids and suppressed side reactions with the electrolyte, thereby improving lifetime characteristics. The specific surface area may be the BET specific surface area. The BET specific surface area may be measured using a Macsorb HM Model-1208 analyzer from Mountech Co., Ltd.

In an embodiment, the first negative electrode active material may have an internal porosity of 2% or less, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2%, and, in an embodiment, 1.8% or less, 1.5% or less, 1.0 to 1.5%, or 1.0 to 1.3%. Within this range, side reactions between the first negative electrode active material and the electrolyte may be suppressed, thereby improving the lifetime of the rechargeable lithium battery. The total pore volume and mesopore volume within the porosity may be quantitatively measured using Barrett-Joyner-Halenda (BJH) analysis.

Herein, a composition of the first negative electrode active material is described in further detail.

The first negative electrode active material includes natural graphite including secondary particles formed by the assembly of primary particles and a coating layer containing amorphous carbon and surrounding the secondary particles.

The natural graphite may be flaky, or flake-shaped (e.g., scale-shaped).

In an embodiment, the primary particles may have a major axis length of 10 to 200 $\mu$m, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200 $\mu$m, and, in an embodiment, 10 to 100 $\mu$m, 30 to 60 $\mu$m, or 20 to 50 $\mu$m. Within this range, the assembly into secondary particles is easy, and the target ratio described below may be easily achieved.

When the primary particles are plate-shaped, the "major axis length" refers to the length of the longest axis between two opposing surfaces.

In an embodiment, the primary particles may be plate-shaped, but are not limited thereto.

In an embodiment, the secondary particles may have an average particle diameter (D50) of 30 $\mu$m or less. Within this range, the target ratio described below may be easily achieved. For example, the secondary particles may have an average particle diameter (D50) of 5 $\mu$m or more and 10 $\mu$m or less, for example 5, 6, 7, 8, 9, or 10 $\mu$m, and, in an embodiment, 6 $\mu$m or more and less than 8 $\mu$m. Within this range, the above-described orientation degree and sphericity may be easily achieved.

In an embodiment, the secondary particles may be spherical, but are not limited thereto.

In an embodiment, the ratio of the major axis length of the primary particles to the average particle diameter (D50) of the secondary particles may be more than 2 and 10 or less. Within this range, the resistance of the active material may not increase, and boost charging performance may not decrease. For example, the ratio may be 2.1, 2.5, 3, 3.5, 4, 4.5, 5, 5.5, 6, 6.5, 7, 7.5, 8, 8.5, 9, 9.5, or 10, and, in an embodiment, 3 to 6, for example, 4 to 6, or 5 to 6. Within this range, the above-described orientation degree and sphericity may be easily achieved.

The amorphous carbon is contained in a coating layer that surrounds the surface of the secondary particles. The amorphous carbon may reduce the porosity inside the first negative electrode active material and suppress side reactions between the negative electrode active material and the electrolyte, thereby improving charge/discharge rate characteristics.

In an embodiment, the coating layer containing the amorphous carbon may have a thickness of 5 to 50 nm, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 nm, and, in an embodiment, 10 to 50 nm, or 20 to 50 nm. Within this range, side reactions with the electrolyte may be suppressed, and charge/discharge rate characteristics may be improved.

The amorphous carbon may be a mixture of one or more types of soft carbon, hard carbon, mesophase pitch carbide, and calcined coke.

The amorphous carbon may be additionally present on the surface of the primary particles.

In an embodiment, based on the total of 100 parts by weight of the natural graphite and the amorphous carbon in the first negative electrode active material, the natural graphite and the amorphous carbon may be included in a weight ratio of 99:1 to 75:25, for example, 90:10 to 75:25, 90:10 to 80:20, 90:10 to 85:15, or 90:10 to 88:12. Within this range, side reactions with the electrolyte may be effectively suppressed, and charge/discharge rate characteristics may be improved.

Herein, a method of preparing the first negative electrode active material according to an embodiment is described.

(1) A natural graphite raw material with an average particle diameter (D50) of 120 $\mu$m or more is pulverized to obtain primary particles with the above major axis length. In a specific example, the natural graphite raw material may be pulverized using an air jet milling method. The airflow crushing may involve pulverizing the natural graphite raw material at room temperature under a pressure of 5 to 20 kg/cm$^2$.

(2) The primary particles are assembled into secondary particles using a spheroidization device.

The assembly process aims to achieve a sphericity of 0.85 or more and may be performed using a high-intensity mixer equipped with a high-speed rotating rotor and stator. The average particle diameter (D50) of the secondary particles may be controlled by adjusting parameters, such as pressure and shear speed, during the spheroidization process.

(3) The prepared secondary particles are mixed with an amorphous carbon precursor.

The amorphous carbon precursor is not particularly limited as long as it forms a carbide. For example, the precursor may include one or more of phenolic resin, furan resin, epoxy resin, polyacrylonitrile resin, polyamide resin, polyimide resin, polyamide-imide resin, synthetic pitch, petroleum-based pitch, coal-based pitch, and tar.

During mixing, the precursor may be added to achieve the above-described weight ratio of natural graphite and amorphous carbon in the final product, i.e., the negative electrode active material.

(4) The mixture obtained in the mixing is calcined and heat-treated to obtain the negative electrode active material.

The heat treatment may be performed at 2500 °C or higher, for example, 2500 to 3500 °C, or 2500 to 3000 °C. Within this range, the negative electrode active material including secondary particles that satisfy the above ratio may easily achieve the above orientation degree, d002, and sphericity.

The heat treatment may be performed for 1 to 5 hours, for example, 1 to 4 hours, 1 to 3 hours, or 2 to 3 hours.

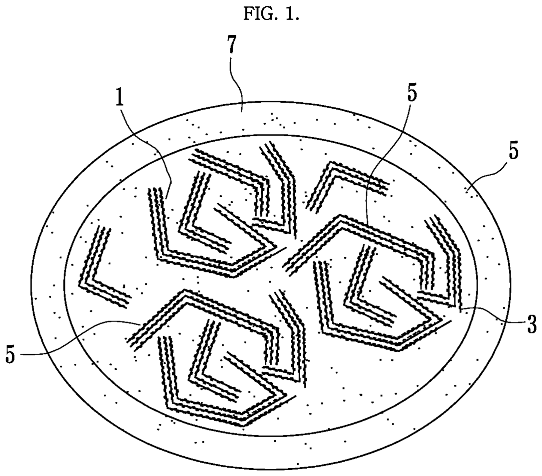

FIG. 1 is a conceptual diagram of the first negative electrode active material according to an embodiment.

Referring to FIG. 1, the first negative electrode active material includes natural graphite including secondary particles 3 formed by the assembly of primary particles 1; amorphous carbon 5 present on the surfaces of the primary particles 1; and a coating layer 7 containing amorphous carbon 5 and surrounding the secondary particles 3. Referring to FIG. 1, the secondary particle 3 is formed by spheroidizing bent primary particles 1 into an aggregated structure. This structure reduces the size of the natural graphite while forming a dense internal structure that minimizes or reduces internal pores, thereby suppressing side reactions with the electrolyte and enhancing cycle life.

## (2) Second negative electrode active material

The second negative electrode active material may be artificial graphite. When the second negative electrode active material is artificial graphite, the second negative electrode active material may exhibit improved chare/discharge efficiency and cycle life characteristics compared to if the second negative electrode active material is natural graphite.

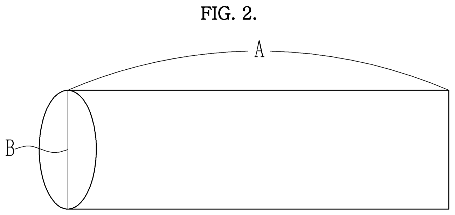

In an embodiment, the second negative electrode active material is rod-shaped crystalline carbon with an elongated structure in a direction. As shown in FIG. 2, the rod-shaped carbon has a major axis A and a minor axis B. The "rod-shaped" refers to a solid rod-like structure with a filled interior, distinguishing the shape from hollow tubular forms or fibrous carbon types even if they have a major axis and a minor axis.

The "rod-shaped" refers to a structure with an aspect ratio (major axis length/minor axis length) of more than 1. In an embodiment, the second negative electrode active material may have an aspect ratio of 2 to 100, or 4 to 20, and may be a carbon-based material. When the aspect ratio of the second negative electrode active material is within the above range, it may further reduce volume expansion and resistance of the negative electrode during charge/discharge while further improving high-rate characteristics.

In an embodiment, the average major axis length of the second negative electrode active material may be 40 to 120 μm, or 50 to 120 μm. When the major axis length of the second negative electrode active material is in the above range, volume expansion and resistance of the negative electrode during charge/discharge cycles may be further reduced, thereby further improving high-rate characteristics.

The "major axis length" refers to the average length of the major axis. For example, among the major axis A and the minor axis B of the rod-shaped (e.g., bar-shaped) carbon shown in FIG. 2, the "major axis length" refers to the size of the major axis A.

In the negative electrode active material according to an embodiment, the area percentage of the second negative electrode active material may be 10% to 40%, or 20% to 30%, of the total area (100%) of the negative electrode active material. The area percentage is measured using a particle size analyzer and indicates the area percentage of the second negative electrode active material per unit area of the negative electrode active material.

Herein, a method of preparing the second negative electrode active material according to an embodiment is described.

The second negative electrode active material may be prepared by pulverizing a resistive material used for graphitization, such as calcined coke, to produce a precursor with an average particle diameter (D50) of 20 μm or less, mixing the precursor with pitch, and then heat-treating the mixture.

A negative electrode plate for a rechargeable lithium battery according to another embodiment includes the above-described negative electrode active material for a rechargeable lithium battery according to an embodiment.

In an embodiment, the negative electrode plate may include the above-described negative electrode active material for a rechargeable lithium battery in an amount of 95 wt% or more, for example, 95 to 100 wt%, or 100 wt% of the total weight of the negative electrode active material.

The negative electrode plate may further include one or more of a binder and a conductive material. The binder and the conductive material are as described below.

A rechargeable lithium battery according to another embodiment includes the negative electrode active material for a rechargeable lithium battery.

In an embodiment, the rechargeable lithium battery may include a negative electrode including the negative electrode active material for a rechargeable lithium battery, and a positive electrode.

**Negative electrode**

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

In an embodiment, for example, the negative electrode active material layer may include about 90 wt% to about 99 wt% of the negative electrode active material, about 0.5 wt% to about 5 wt% of the binder, and about 0 wt% to about 5 wt% of the conductive material.

The negative active material includes the negative active material according to the above-described embodiment. In an embodiment, the negative active material according to the above-described embodiment may be included in an amount of 95 wt% or more, for example, 95 to 100 wt%, or 100 wt%, of the total negative active material in the negative active material layer.

The negative electrode active material layer may further include a material that reversibly intercalates/deintercalates lithium ions, a lithium metal, a lithium metal alloy, a material capable of doping/dedoping lithium, or a transition metal oxide, in addition to the negative active material according to the above-described embodiment.

The material that reversibly intercalates/deintercalates lithium ions may include a carbon-based negative electrode active material, such as, for example, crystalline carbon, amorphous carbon or a combination thereof. The crystalline carbon may be graphite, such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

In an embodiment, the lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on a surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may attach the negative electrode active material particles well to each other and also attach the negative electrode active material well to the current collector.

The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

If an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. In an embodiment, the alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any suitable material that does not cause chemical change (e.g., does not cause an undesirable chemical change in the rechargeable lithium battery) and that conducts electrons can be used in the battery. Some non-limiting examples thereof may include a carbon-based material, such as natural graphite, artificial graphite, carbon black, acetylene black, Ketjen black, a carbon fiber, a carbon nanofiber, and a carbon nanotube; a metal-based material including copper, nickel, aluminum, silver, etc. in a form of a metal powder or a metal fiber; a conductive polymer, such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

## Positive electrode

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can function as a sacrificial positive electrode.

## Positive electrode active material

The positive electrode active material may include a compound (lithiated intercalation compound) that is capable of intercalating and deintercalating lithium. In an embodiment, at least one of a composite oxide of lithium and a metal selected from cobalt, manganese, nickel, and combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any of the following Chemical Formulas may be used: $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}O_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, an amount of the positive electrode active material may be about 90 wt% to about 99.5 wt% based on 100 wt% of the positive electrode active material layer. In an embodiment, amounts of the binder and the conductive material may be about 0.5 wt% to about 5 wt%, respectively, based on 100 wt% of the positive electrode active material layer.

The binder may attach the positive electrode active material particles well to each other and also attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer, such as a polyphenylene derivative; or a mixture thereof.

In an embodiment, Al may be used as the current collector, but is not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may function as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles, such as R-CN (wherein R is a C2 to C20 linear, branched, or cyclic hydrocarbon group, a double bond, an aromatic ring, or an ether bond, and the like; amides, such as dimethylformamide; dioxolanes such as 1,3-dioxolane, 1,4-dioxolane, and the like; sulfolanes, and the like.

The non-aqueous organic solvents may be used alone or in combination of two or more.

In addition, if using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

The lithium rechargeable battery may further include a separator.

**Separator**

Depending on a type of the rechargeable lithium battery, a separator may be present between the positive electrode and the negative electrode. The separator may include any of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both, or opposite, surfaces of the porous substrate.

The porous substrate may be a polymer film formed of any selected from a polymer polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

In an embodiment, the inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**The rechargeable lithium battery**

The rechargeable lithium battery may be classified into any of cylindrical, prismatic, pouch, or coin-type batteries, and the like, depending on a shape thereof.

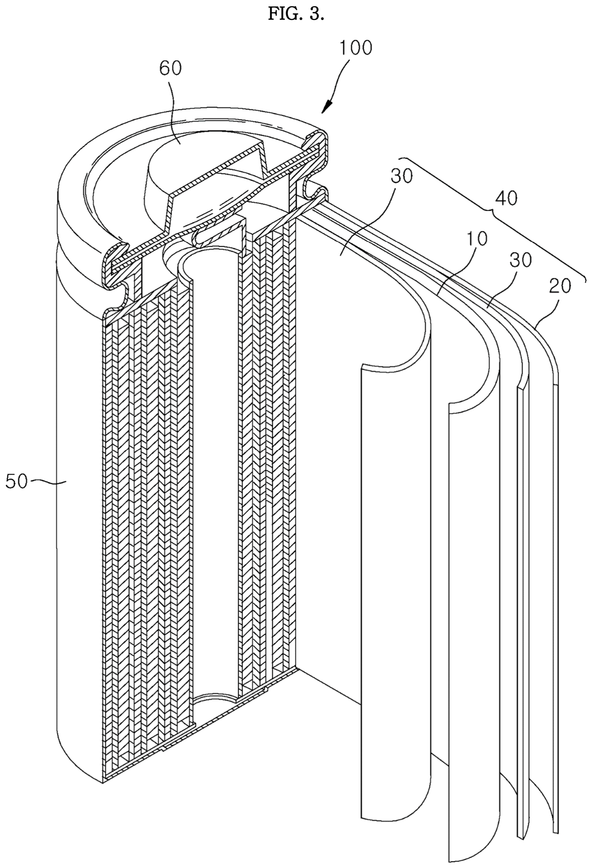

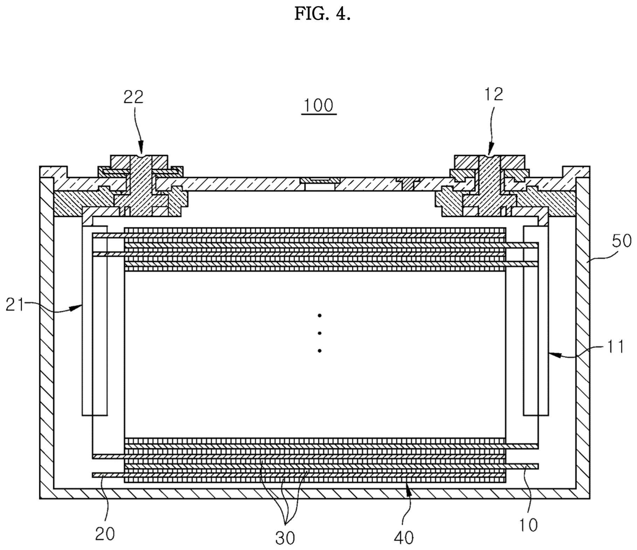

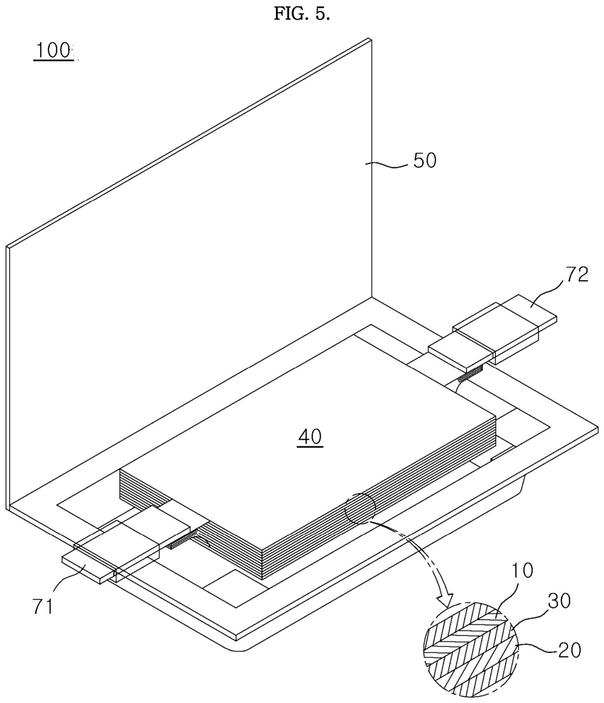

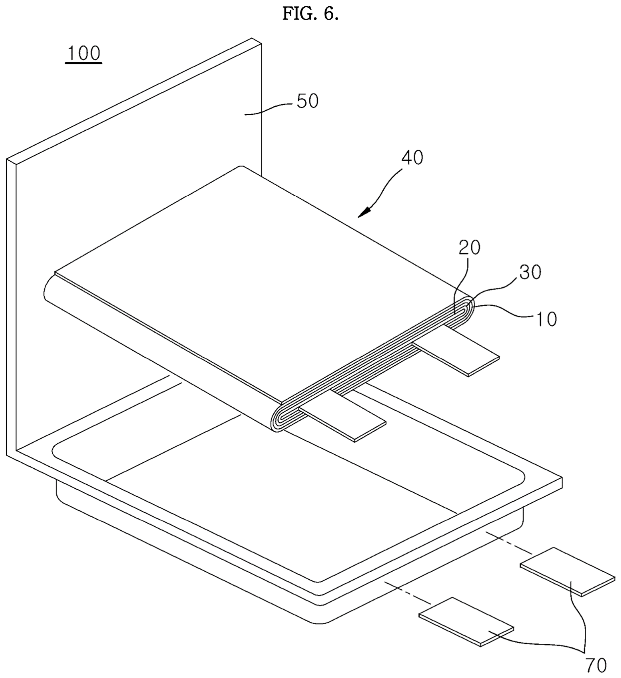

FIGS. 3 to 6 are schematic views illustrating a rechargeable lithium battery according to an embodiment. FIG. 3 shows a cylindrical battery; FIG. 4 shows a prismatic battery; and FIGS. 5 and 6 show pouch-type batteries. Referring to FIGS. 3 to 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 3. In FIG. 4, the rechargeable lithium battery 100 may include a positive lead tab 11, a positive terminal 12, a negative lead tab 21, and a negative terminal 22. As shown in FIGS. 5 and 6, the rechargeable lithium battery 100 may include an electrode tab 70, which may be, for example, a positive electrode tab 71 and a negative electrode tab 72 functioning as an electrical path for inducing the current formed in the electrode assembly 40 to the outside.

The rechargeable lithium battery according to an embodiment may be applied to automobiles, mobile phones, and/or various types of electric devices, as non-limiting examples.

Herein, some examples and comparative examples of the present invention are described. However, the following examples are provided as illustrative examples of the present invention, and the present invention is not limited to the following examples.

**Example 1**

(1) Preparation of first negative electrode active material

A flaky natural graphite raw material with an average particle diameter (D50) of 120 $\mu$m was pulverized using an airflow crushing method to obtain plate-shaped primary particles with a major axis length of 20 to 30 $\mu$m. The primary particles were assembled into secondary particles with an average particle diameter (D50) of 7 $\mu$m using a spheroidization device. The secondary particles were mixed with pitch carbon and heat-treated in a calcining furnace at 3000 °C for 2 hours to prepare a first negative electrode active material. The amount of pitch carbon added was adjusted so that a weight ratio of natural graphite to amorphous carbon was 90:10 in the negative electrode active material.

(2) Heat-treated coke with a length of 10 cm was pulverized into a precursor with an average particle diameter of 20 $\mu$m. The precursor was mixed with pitch and heat-treated to produce rod-shaped artificial graphite (containing amorphous carbon) as a second negative electrode active material. The rod-shaped artificial graphite had a major axis length of 80 $\mu$m and an aspect ratio of 4 to 20.

(3) 50 parts by weight of the first negative electrode active material and 50 parts by weight of the second negative electrode active material were mixed to prepare a negative electrode active material mixture.

(4) A negative electrode active material slurry was prepared by mixing 97.5 wt% of the prepared negative electrode active material mixture, 1.5 wt% of styrene-butadiene rubber as a binder, and 1.0 wt% of carboxymethyl cellulose as an additive in distilled water.

The negative electrode active material slurry was applied onto a copper current collector, dried, and roll-pressed to manufacture a negative electrode.

A half-cell was manufactured using the negative electrode, a lithium metal counter electrode, and an electrolyte. The electrolyte is a mixed solvent of ethylene carbonate and dimethyl carbonate (at a 3:7 volume ratio) in which 1 M $LiPF_4$ is dissolved.

**Example 2**

A negative electrode plate was prepared in the same manner as in Example 1, except that 20 parts by weight of the first negative electrode active material and 80 parts by weight of the second negative electrode active material were mixed to prepare the negative electrode active material mixture.

### Example 3

The first negative electrode active material was prepared by modifying the spheroidization conditions in Example 1.

Using the first negative electrode active material, a mixture of 50 parts by weight of the first negative electrode active material and 50 parts by weight of the second negative electrode active material was prepared. Afterward, a negative electrode plate was manufactured in the same manner as in Example 1.

### Comparative Example 1

A negative electrode plate was prepared in the same manner as in Example 1, except that only the second negative electrode active material was used without the first negative electrode active material.

### Comparative Example 2

The first negative electrode active material was prepared in the same manner as in Example 1, except that pitch carbon was not added. Using the prepared first negative electrode active material, a negative electrode and a half-cell were manufactured in the same manner as in Example 1.

### Comparative Example 3

A flaky natural graphite raw material with an average particle diameter (D50) of more than 120 $\mu$m was pulverized using an airflow crushing method to obtain primary particles with a D50 of 120 $\mu$m. The primary particles were assembled into secondary particles with an average particle diameter (D50) of 20 $\mu$m using a spheroidization device. The secondary particles were mixed with pitch carbon and heat-treated in a calcining furnace at 1200 °C for 2 hours to prepare a first negative electrode active material. The amount of pitch carbon added was adjusted so that a weight ratio of natural graphite to amorphous carbon was 90:10 in the first negative electrode active material.

Using the prepared first negative electrode active material, a half-cell was manufactured in the same manner as in Example 1.

### Comparative Example 4

A flaky natural graphite raw material with an average particle diameter (D50) of 80 $\mu$m was pulverized using an airflow crushing method to obtain primary particles with a major axis length of 7 $\mu$m. The primary particles were assembled into spherical secondary particles with an average particle diameter (D50) of 15.6 $\mu$m using a spheroidization device. The secondary particles were mixed with pitch carbon and heat-treated in a calcining furnace at 1200 °C for 2 hours to prepare the first negative electrode active material. The amount of pitch carbon added was adjusted so that a weight ratio of natural graphite to amorphous carbon was 90:10 in the first negative electrode active material.

Using the prepared first negative electrode active material, a half-cell was manufactured in the same manner as in Example 1.

### (Experimental Example 1) [First negative electrode active material]

### Pellet density (units: g/cc)

The pellet density was measured using a Carver 4350.L device from Carver, Inc. To determine the powder density, 1.0 g of each first negative electrode active material of the Examples and Comparative Examples was placed in a mold and compressed under a pressure of 2.0 tons for 30 seconds.

### Orientation degree

The orientation degree was measured using an XRD analyzer, X'Pert Pro from Malvern Panalytical. For each first negative electrode active material of the Examples and Comparative Examples, the ratio of diffraction peak intensities, I(002)/I(110), was calculated using X-ray diffraction analysis with Cu $\alpha$ radiation.

### d002 (units: Å)

The d002 interplanar spacing was measured using an XRD analyzer, X'Pert Pro from Malvern Panalytical. For each first negative electrode active material of the Examples and Comparative Examples, the interplanar spacing of the (002) plane was determined through X-ray diffraction analysis with Cu α radiation.

**Mercury cumulative pore volume (units: mL/g)**

For each first negative electrode active material of the Examples and Comparative Examples, the Hg cumulative pore volume was measured using a Hg intrusion porosimeter (AutoPore V from Micromeritics). The negative electrode active material was placed in a specialized sample cup and surrounded by mercury, and a pressure of 0.2 to 60,000 psi was applied to force mercury into the negative electrode active material. The resulting change in mercury volume within the capillary stem reservoir was measured to determine the pore volume. This method can measure pore sizes in a range from 0.01 to 100 μm, and, in negative electrode active materials, pores with a size of 0.01 μm or more and 5 μm or less are typically considered to be internal pores in the active material.

**Sphericity**

Sphericity was measured using a Morphologi 4 analyzer from Malvern Panalytical. For each first negative electrode active material of the Examples and Comparative Examples, values A and B in Equation 1 above were obtained, and sphericity was calculated according to Equation 1.

**(Experimental Example 2) [Electrode plate and half-cell]**

**Average particle diameter D50 (units: μm)**

The average particle diameter (D50) of the mixture of the first and second negative electrode active materials was measured using a laser diffraction particle size analyzer (LS 13 320 XR from Beckman Coulter).

**Pellet density (units: g/cc)**

The pellet density was measured using a Carver 4350.L device from Carver, Inc. A mixture of 1.0 g of each first and second negative electrode active material of the Examples and Comparative Examples was placed in a mold and compressed under a pressure of 2.0 tons for 20 seconds to determine the pellet density.

**Capacity (units: mAh/g) and rate characteristics (units: %)**

The half-cells manufactured in the Examples and Comparative Examples were subjected to 1 cycle of charge/discharge at 0.1 C, and 2 cycles of charge/discharge at 0.2 C, and then the 0.2 C charge capacity was measured. Subsequently, charging was performed at 2.0 C with a 0.01 V cut-off. Then, under constant voltage conditions, charging continued until reaching a 0.01 C cut-off. The cells were then discharged under constant current conditions at 0.2 C with a 1.5 V cut-off to determine the 2 C charge capacity. Rate characteristics were evaluated by calculating the ratio of the 2 C charge capacity to the 0.2 C charge capacity.

**Orientation degree of mixture**

The orientation degree was measured using an XRD analyzer, X'Pert Pro from Malvern Panalytical. For each negative electrode active material of the Examples and Comparative Examples, the ratio of diffraction peak intensities, I(002)/I(110), was calculated using X-ray diffraction analysis.

Table 1

| | | Examples | | | Comparative Examples | | | |
|---|---|---|---|---|---|---|---|---|
| | | 1 | 2 | 3 | 1 | 2 | 3 | 4 |
| First negative electrode active material | Primary particle major axis length (μm) | 30 | 30 | 30 | - | 30 | 120 | 7 |
| | Secondary particle D50 (μm) | 7 | 7 | 10 | - | 7 | 20 | 15.6 |
| | Pellet density | 1.75 | 1.75 | 1.80 | - | 1.9 | 1.8 | 1.78 |
| | Orientation degree | 60 | 60 | 80 | - | 70 | 110 | 120 |
| | d002 | 3.356 9 | 3.356 9 | 3.356 7 | - | 3.355 8 | 3.355 9 | 3.356 1 |
| | Sphericity | 0.95 | 0.95 | 0.95 | - | 0.95 | 0.95 | 0.95 |
| | Pore volume (Hg cumulative pore volume) | 0.035 | 0.035 | 0.041 | - | 0.158 | 0.065 | 0.066 |
| First negative electrode active material:second negative electrode active material | | 50:50 | 20:80 | 50:50 | 0:100 | 50:50 | 50:50 | 50:50 |
| D50 | | 13 | 13 | 15 | 20 | 13 | 20 | 17 |
| Pellet density | | 1.55 | 1.55 | 1.5 | 1.4 | 1.65 | 1.6 | 1.57 |
| Capacity | | 355 | 355 | 352 | 347 | 357 | 355 | 351 |
| Initial efficiency | | 92 | 91 | 92 | 89 | 89 | 86 | 89 |
| Rate characteristics | | 49 | 47 | 50 | 32 | 44 | 42 | 38 |
| Orientation degree of mixture | | 90 | 100 | 80 | 1186 | 310 | 220 | 420 |

As shown in Table 1 above, the negative electrode active material of the Examples can increase initial efficiency and enhance rate characteristics. Although not shown in Table 1, the negative electrode active material of the Examples, which includes both the first and second negative electrode active materials of the present invention, is expected to exhibit a low orientation degree of 200 or less, thereby enhancing electrolyte impregnation and reducing the expansion of the negative electrode plate.

However, as shown in Table 1, Comparative Example 1, which includes only the second negative electrode active material without the first negative electrode active material, exhibited low initial efficiency and rate characteristics. Additionally, an orientation degree thereof was significantly higher compared to the Examples, indicating that the electrolyte impregnation and the improvement in electrode plate expansion would likely be considerably reduced. As shown in Table 1, Comparative Examples 2 to 4, which do not include the first negative electrode active material of the present invention, also exhibited lower initial efficiency and rate characteristics. Since Comparative Examples 2 to 4 failed to meet the orientation degree range specified in the present invention, electrolyte impregnation and improvement in electrode plate expansion thereof are expected to be significantly reduced.

The negative electrode active material for a rechargeable lithium battery, according to an aspect of embodiments of the present invention, can exhibit excellent rechargeable lithium battery performance by providing effects of boost charging, improved charge C-rate characteristics, enhanced electrolyte impregnation, and suppression of electrode plate expansion.

Although some example embodiments of the present invention have been described above, the present invention is not limited thereto, and it is to be understood that various modifications are possible within the scope of the claims, detailed description, and attached drawings of the invention, and that such modifications also fall within the scope of the present invention.

**Claims**

1.   A negative electrode active material comprising a mixture of a first negative electrode active material and a second negative electrode active material,

wherein the first negative electrode active material comprises natural graphite comprising secondary particles in which primary particles are arranged; and a coating layer containing amorphous carbon and surrounding the secondary particles,

the first negative electrode active material has an orientation degree of 90 or less and a d002 value of 3.356 Å to 3.360 Å, and

the second negative electrode active material comprises rod-shaped artificial graphite.

2. The negative electrode active material as claimed in claim 1, wherein the first negative electrode active material has a mercury (Hg) cumulative pore volume of 0.01 to 0.06 mL/g.

3. The negative electrode active material as claimed in claim 1 or 2, wherein the first negative electrode active material has a pellet density of 1.60 to 1.80 g/cc.

4. The negative electrode active material as claimed in any of the preceding claims, wherein the first negative electrode active material has a sphericity of 0.85 or more.

5. The negative electrode active material as claimed in any of the preceding claims, wherein a ratio of a major axis length of the primary particles to an average particle diameter (D50) of the secondary particles is greater than 2 and less than or equal to 10.

6. The negative electrode active material as claimed in any of the preceding claims, wherein the primary particles are plate-shaped, and the secondary particles are spherical.

7. The negative electrode active material as claimed in any of the preceding claims, wherein the primary particles have a major axis length of 10 to 200 $\mu$m, and the secondary particles have an average particle diameter (D50) of 30 $\mu$m or less.

8. The negative electrode active material as claimed in any of the preceding claims, wherein the natural graphite comprises flaky natural graphite.

9. The negative electrode active material as claimed in any of the preceding claims, wherein the amorphous carbon comprises a mixture of one or more types selected from soft carbon, hard carbon, mesophase pitch carbide, and calcined coke.

10. The negative electrode active material as claimed in any of the preceding claims, wherein the coating layer containing amorphous carbon has a thickness of 5 to 50 nm.

11. The negative electrode active material as claimed in any of the preceding claims, wherein the primary particles further comprise amorphous carbon on surfaces thereof.

12. The negative electrode active material as claimed in any of the preceding claims, wherein, based on a total of 100 parts by weight of the natural graphite and the amorphous carbon in the first negative electrode active material, the natural graphite and the amorphous carbon are included in a weight ratio of 99:1 to 75:25.

13. The negative electrode active material as claimed in any of the preceding claims,

   - wherein the second negative electrode active material has an aspect ratio of 2 to 100; and/or
   - wherein the second negative electrode active material has an average major axis length of 40 to 120 $\mu$m.

14. The negative electrode active material as claimed in any of the preceding claims,

   - wherein the mixture has a peak intensity ratio I(002)/I(110) of 200 or less, as measured by X-ray diffraction analysis; and/or
   - wherein the mixture includes 10 to 80 wt% of the first negative electrode active material and 20 to 90 wt% of the second negative electrode active material; and/or
   - wherein the negative electrode active material is for a rechargeable lithium battery.

15. A rechargeable lithium battery comprising:

a negative electrode comprising the negative electrode active material as claimed in any of the preceding claims; and
a positive electrode.

FIG. 1.

FIG. 2.

FIG. 3.

FIG. 4.

FIG. 5.

FIG. 6.

| | Europäisches Patentamt European Patent Office Office européen des brevets | **EUROPEAN SEARCH REPORT** | **Application Number** EP 25 21 9171 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/379959 A1 (CHOI HEE SEON [KR] ET AL) 14 November 2024 (2024-11-14) * [0083]; [0123-8]: "Example 1"; claims 1-16 * ----- | 1-15 | INV. H01M4/133 ADD. H01M4/36 |
| T | KWON HAE-JUN ET AL: "Achieving High-Performance Spherical Natural Graphite Anode through a Modified Carbon Coating for Lithium-Ion Batteries", ENERGIES, vol. 14, no. 7, 1 April 2021 (2021-04-01), page 1946, XP093367092, CH ISSN: 1996-1073, DOI: 10.3390/en14071946 Retrieved from the Internet: URL:https://www.mdpi.com/1996-1073/14/7/1946> * the whole document * ----- | | |

| | | | TECHNICAL FIELDS SEARCHED (IPC) |
|---|---|---|---|
| | | | H01M |

The present search report has been drawn up for all claims

| Place of search | Date of completion of the search | Examiner |
|---|---|---|
| Munich | 17 February 2026 | Radeck, Stephanie |

## ANNEX TO THE EUROPEAN SEARCH REPORT
## ON EUROPEAN PATENT APPLICATION NO.

EP 25 21 9171

17-02-2026

| Patent document cited in search report | Publication date | Patent family member(s) | | Publication date |
|---|---|---|---|---|
| US 2024379959 A1 | 14-11-2024 | CN | 118943315 A | 12-11-2024 |
| | | EP | 4465381 A1 | 20-11-2024 |
| | | KR | 20240163415 A | 19-11-2024 |
| | | US | 2024379959 A1 | 14-11-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240175699